(19) Europäisches Patentamt
European Patent Office
Office européen des brevets

(11) **EP 2 958 330 A1**

(12) **EUROPEAN PATENT APPLICATION**

(43) Date of publication:
**23.12.2015 Bulletin 2015/52**

(51) Int Cl.:
***H04N 19/98*** (2014.01)

(21) Application number: **14305949.1**

(22) Date of filing: **20.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Andrivon, Pierre**
**35576 CESSON SEVIGNE (FR)**

• **Lasserre, Sebastien**
**35576 CESSON SEVIGNE (FR)**
• **Francois, Edouard**
**35576 CESSON SEVIGNE (FR)**

(74) Representative: **Huchet, Anne**
**Technicolor**
**1-5 rue Jeanne d'Arc**
**92130 Issy-Les-Moulineaux (FR)**

(54) **Method and device for decoding a HDR picture from a bitstream representing a LDR picture and an illumination picture**

(57)   The present disclosure generally relates to a method and device for decoding an HDR picture from a bitstream representing a LDR picture and an illumination picture. The method comprising:
- obtaining a decoded version of the HDR picture by multiplying the sample values of a decoded version of the LDR picture by the sample values of the decoded version of the illumination picture; and
- obtaining a color value expressed in an output color space for each sample value of the decoded version of the HDR picture, the method is characterized in that it further comprises:
- obtaining a color value expressed in the output color space for each sample value of a decoded version of the LDR picture just before multiplying said color values by the sample values of the decoded version of the illumination picture.

Fig. 2

**Description**

**2. Field.**

The present disclosure generally relates to picture/video decoding. Particularly, but not exclusively, the technical field of the present disclosure is related to decoding of a picture whose pixels values belong to a high-dynamic range.

**3. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In the following, a picture (sometimes called an image or frame in prior art) contains one or several arrays of samples (pixel values) in a specific picture/video format which specifies all information relative to the pixel values of a picture (or a video) and all information which may be used by a display and/or a decoding device to visualize and/or decode a picture (or video). A picture comprises at least one component, in the shape of a first array of samples, usually a luma (or luminance) component, and, possibly, at least one other component, in the shape of at least one other array of samples, usually a color component.

Low-Dynamic-Range pictures (LDR pictures) are pictures whose *luma* samples are represented with a limited number of bits (most often 8 or 10). This limited representation does not allow correct rendering of small signal variations, in particular in dark and bright luminance ranges. In high-dynamic range pictures (HDR pictures), the signal representation is extended in order to maintain a high accuracy of the signal over its entire range. In HDR pictures, *luma* samples are usually represented in floating-point format (either 32-bit or 16-bit for each component, namely float or half-float), the most popular format being openEXR half-float format (16-bit per RGB component, i.e. 48 bits per sample) or in integers with a long representation, typically at least 16 bits.

A dual modulation scheme is a typical approach for encoding an input HDR picture in a bitstream and for obtaining a decoded version of the input HDR picture by decoding the bitstream at least partially.

At the encoding side, an illumination picture IF (also called illumination map or backlight picture) is obtained from the input HDR picture. A residual picture Res is then obtained by dividing the input HDR picture by the illumination picture IF and both the illumination picture IF (or illumination data representing the illumination picture) and the residual picture Res are then encoded in a bitstream F. Encoding an input HDR picture using this approach leads to encode two components in a bitstream F: a residual picture Res (called the LDR picture in the following), which may be a viewable picture, i.e. a picture with reduced visual artifacts and adapted to be viewed on a display, and illumination picture IF (or illumination data representing the illumination picture).

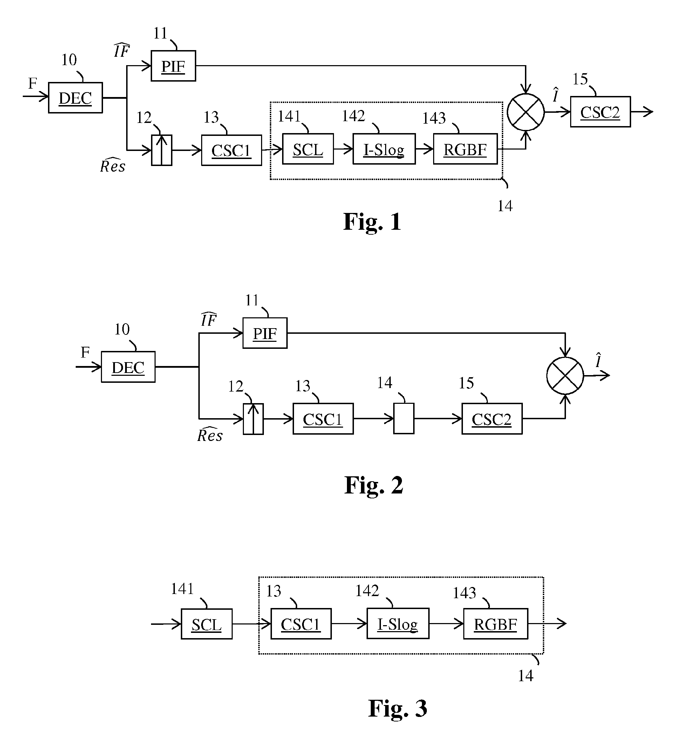

**Fig.** 1 shows a diagram of the steps of a method for decoding an HDR picture from the bitstream F according to the prior art (for example, "High Dynamic Range Video Coding", Lasserre et al., JCTVC-P0159/m32076,16th MPEG meeting, San José (CA), 9-17 Jan. 2014).

In step 10, a decoder DEC is configured for obtaining the sample values of a decoded version $\widehat{Res}$ of the LDR picture Res and the sample values of a decoded version $\widehat{IF}$ of the illumination picture IF by directly decoding the bitstream F at least partially.

A decoded version $\hat{I}$ of the HDR picture to be decoded is then obtained by multiplying the decoded version of the LDR picture Res by the decoded version of the illumination picture IF.

Possibly, some specific post-processing are applied to the decoded version $\widehat{Res}$ of the LDR picture Res and to the decoded version $\widehat{IF}$ of the illumination picture IF.

For example, in step 11, a module PIF is configured for applying some post- processing to the decoded version $\widehat{IF}$ of the illumination picture IF which may be, for a non limitative example, an upsampling and/or an inverse-gamma correction.

For the decoded version $\widehat{Res}$ of the LDR picture Res, it is usual that the successive post-processing shown in **Fig. 1** be applied.

For example, in step 12, the chroma components of the decoded version $\widehat{Res}$ of the LDR picture Res are upsampled in order to convert the usual 4:2:0 format of the decoded version $\widehat{Res}$ of the LDR picture Res to a 4:4:4 format. This step 12 is of course optional.

The sample values of the decoded version $\widehat{Res}$ of the LDR picture Res are usually expressed in the well-known YCbCr color space.

For example, in step 13, a module CSC1 is configured for obtaining a RGB color value for each YCbCr sample value of the decoded version *Res* of the LDR picture Res.

For example, in step 14, some other post-processing are applied to the decoded version $\widehat{Res}$ of the LDR picture.

For example, in substep 141, a module SCL scales the decoded version $\widehat{Res}$ of the LDR picture Res by dividing each sample value of the decoded version $\widehat{Res}$ of the LDR picture Res by a scaling factor $cst_{scaling}$. The resulting LDR picture $Res_s$ is then given by

$$\mathrm{Res_s} = \widehat{Res}/cst_{scaling}$$

For example, the scaling factor $cst_{scaling}$ is defined to map the sample values of the decoded version $\widehat{Res}$ of the LDR picture Res from 0 to the maximum value $2^N-1$, where N is the number of bits allowed as input for further post-processing.

This is naturally obtained by mapping the value 1 (which is roughly the mean value of the decoded version $\widehat{Res}$ of the LDR picture Res) to the mid-gray value $2^{N-1}$. Thus, for a decoded version $\widehat{Res}$ of the LDR picture Res with a standard number of bits N=8, a scaling factor equal to 120 is a very consistent value because very closed to the neutral gray at $2^7=128$.

For example, in step 142, a module ITMO applied an inverse-tone-mapping to the decoded version $\widehat{Res}$ of the LDR picture.

Tone mapping a LDR picture, at the encoding side, comprises either a gamma correction or a SLog correction according to the sample values of the LDR picture Res.

A tone-mapped version $Res_v$ of the LDR picture Res is given, for example, by:

$$Res_v = A. Res^\gamma$$

with A being a constant value, $\gamma$ being a coefficient of a gamma curve equal, for example, to 1/2.4.

Alternatively, the tone-mapped version $Res_v$ of the LDR picture Res is given, for example, by:

$$Res_v = a. \ln(Res + b) + c$$

with a,b and c being coefficients of a SLog curve determined such that 0 and 1 are invariant, and the derivative of the SLog curve is continuous in 1 when prolonged by a gamma curve below 1. Thus, a,b and c are functions of the parameter $\gamma$.

Applying a gamma correction on the LDR picture Res, pulls up the dark regions but does not lower enough high lights to avoid burning of bright pixels.

Applying a SLog correction on the LDR picture Res lowers enough high lights but does not pull up the dark regions.

Then, advantageously, tone-mapping a LDR picture Res comprises either the gamma correction or the SLog correction according to the sample values of the LDR picture Res. For example, when the pixel value of the LDR picture Res is below a threshold (for example equal to 1), then the gamma correction is applied and otherwise the SLog correction is applied.

Inverse-tone-mapping the decoded version $\widehat{Res}$ of the LDR picture Res comprises applying either an inverse Slog-correction or inverse gamma-correction. For example, the inverse-tone-mapping is just to find, from the gamma curve, the values which correspond to the sample values of the decoded version $\widehat{Res}$ of the LDR picture Res using the gamma curve.

For example, in step 143, a module RGBF is configured for applying a RGB factor to the decoded version $\widehat{Res}$ of the LDR picture Res, i.e. multiplying the sample values of the decoded version $\widehat{Res}$ of the LDR picture by a coefficient, adding an offset to get resulting values and finally right-shifting the resulting values.

It is usual that, in step 15, a module CSC2 is configured for obtaining a color value expressed in a specific output color space for each sample value of the decoded version $\hat{I}$ of the HDR picture.

Note the module CSC2 may be configured for applying other processing such a specific gamma correction and/or OETF (Opto-Electrical Transfer Function).

Typically, the specific output space is linear. Any RGB or XYZ (also called CIEXYZ) color spaces may be used as output color space. For example, a XYZ color space may be combined with a RGB color space with primaries compliant with Rec. 2020. When XYZ color space is used as output color space, the module CSC2 is then configured for obtaining a XYZ color value for each RGB sample value of the decoded version $\hat{I}$ of the HDR picture.

A straightforward implementation of such a decoding method with backward compatible or viewable (on legacy rendering devices) LDR picture consider floating point arithmetic in order to preserve the signal dynamic range and precision all along the decoding processing (step 11-15). However using floating point may hinder a short-term deployment (portage) on existing Consumer Electronic (CE) architectures such as STB, BD-player, TV sets that are massively and traditionally employing 16 or 32-bit integer arithmetic (Arithmetic Logic Unit). The main reason is that real-world deployed color converters may not accept signal which requires, during the color conversion, intermediate values having a dynamic greater than 16 or 32 bits.

For instance, considering a typical 8-bit integer converter configured for converting RGB sample values (r,g,b) (with BT.709 primaries) to XYZ color values (y,y,z) with a 8-bit dynamic range for both the input and output sample values. The well-known conversion equations are the following:

$$x = (422 * r + 366 * g + 185 * b + 128) >> 10;$$

$$y = (218 * r + 732 * g + 74 * b + 128) >> 10;$$

$$z = (20 * r + 122 * g + 973 * b + 128) >> 10;$$

with 10 bits coefficients accuracy for conversion accuracy preservation's sake.

For the resulting x component of a XYZ sample values from a RGB sample value (255, 255, 255), the following 18-bits intermediate values occur: 422 x 255 + 366 x 255 + 185x255 +128 = 107610 (17 bits) + 93330 (17 bits) + 47175 (16 bits) + 128 (8 bits) = 200940 (18 bits) + 47303 (16 bits) = 248243 (18 bits); that are then right-shifted by 10 for a result of 242 (8 bits).

Thus, for 8-bit RGB sample values (input), the dynamic range of the intermediate values reaches up to 18 bits which cannot be implemented on a typical 16-bits integer color converter. Other examples show that 24-bits input requires 34-bits intermediate values.

Keeping in mind the preservation of performance (i.e. negligible loss of floating point to integer conversion), a direct portage of such a decoding method implies huge dynamic range for input/output interfaces as well as intermediate buffers (intermediate values) typically greater than 16 (and even 32) bits that may raise issue for current mass-market computing resources.

Besides, clipping the intermediate (and/or output) values to reduce their dynamic range during the color converting process badly impacts performance.

Moreover, reducing the dynamic range of coefficients for color conversion implies a loss of accuracy for input sample values having a high dynamic range and such a reduction involves then also badly impacts performance.

The present disclosure has been devised with the foregoing in mind.

**4. Summary.**

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy some of the drawbacks of the prior art with a method for decoding a HDR picture from a bitstream representing a LDR picture and an illumination picture. The method comprises:

- obtaining a decoded version of the HDR picture by multiplying the sample values of a decoded version of the LDR picture by the sample values of the decoded version of the illumination picture;
- obtaining a color value expressed in an output color space for each sample value of the decoded version of the HDR picture; and
- obtaining a color value expressed in the output color space for each sample value of a decoded version of the LDR picture just before multiplying said color values by the sample values of the decoded version of the illumination picture.

Color-converting the sample values of the decoded version of the LDR picture just before multiplying rather than color-converting the decoded version of the HDR picture reduces significantly the dynamic range of the sample values to be color-converted (and of the intermediate values requires during the color conversion processing) and allows a 16 (or 32) bit integer implementation of the complete decoding method taking into account the constraints of the typical 16 (or 32) bit color converters.

In other terms, the color conversion (module CSC2) which usually occurs after the multiplication of the decoded version of the LDR picture by the decoded version of the illumination picture has been replaced by a color conversion of the decoded version of the LDR picture, in accordance with the disclosure. Note such a modification of the decoding method swaps linear operations (color conversion, multiplication). Indeed, such a modification of the decoding method of a usual dual modulation scheme allows an integer implementation of the modified decoding method of a usual dual modulation that preserves the performance of a whole floating point processing workflow.

According to a variant, the method further comprising scaling and color-converting the sample values of the decoded version of the LDR, the sample values of the decoded version of the LDR are color-converted before scaled in accordance with this variant.

The specific nature of the disclosure as well as other objects, advantages, features and uses of the disclosure will become evident from the following description of embodiments taken in conjunction with the accompanying drawings.

**4. Brief Description of Drawings.**

In the drawings, an embodiment of the present invention is illustrated. It shows:

- **Fig. 1** shows a diagram of the steps of a method for decoding an HDR picture from the bitstream F according to the prior art;
- **Fig. 2** shows a diagram of the steps of a method for decoding an HDR picture from the bitstream F in accordance with an embodiment of the disclosure;
- **Fig. 3** shows a diagram of the steps of a method for decoding an HDR picture from the bitstream F in accordance with a variant of the embodiment of the disclosure described in relation with **Fig. 1;**
- **Fig. 4** shows an illustration of the dynamic range of both a YCbCr and RGB color space; and
- **Fig. 5** shows an example of an architecture of a device in accordance with an embodiment of the disclosure.

Similar or same elements are referenced with the same reference numbers.

**5. Description of Embodiments.**

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

In the following, a picture (sometimes called an image or frame in prior art) contains an array of samples (pixel values) in a specific picture/video format which specified all information relative to the pixel values of the picture (or a video) and all information which may be used by a display and/or a decoding device. A picture comprises at least one component, usually a luma (or luminance) component, and, possibly, at least one other component, usually a color component.

The disclosure is described for decoding a picture but extends to the decoding of a sequence of pictures (video) because each picture of the sequence is sequentially decoded as described below.

**Fig. 2** shows a diagram of the steps of a method for decoding an HDR picture from the bitstream F in accordance with an embodiment of the disclosure.

Compared to the **Fig. 1,** the module CSC2 now applied to the decoded version $\widehat{Res}$ of the LDR picture Res (possibly post-processed) and not to the decoded version $\hat{I}$ of the HDR picture as described in prior art **(Fig. 1)**.

Thus, a color value expressed in the output color space, e.g. CIEXYZ, is obtained for each sample value of the decoded version $\widehat{Res}$ of the LDR picture Res expressed in a color space, e.g. RGB.

**Fig. 3** shows a diagram of the steps of a method for decoding an HDR picture from the bitstream F in accordance with a variant of the embodiment of the disclosure described in relation with **Fig. 1.**

According to this variant, the decoding method further comprises scaling (step 141) and color-converting (step 13) the decoded version $\widehat{Res}$ of the LDR picture Res.

According to the disclosure, the sample values of the decoded version $\widehat{Res}$ of the LDR picture Res are scaled (step 141) before being color-converted (step 13).

More precisely, a RGB color value is obtained for each scaled YCbCr sample value following the above example.

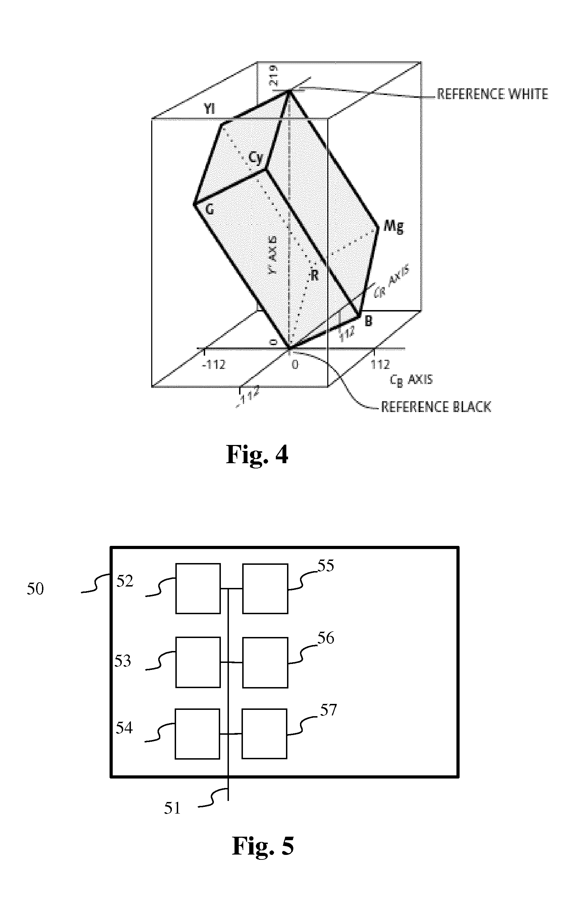

Scaling YCbCr sample values rather than scaling RGB sample values reduced the dynamic range of the resulting scaled and color-converted sample values because the dynamic range of the YCbCr sample values is smaller than the dynamic range of the RGB sample values as explained in **Fig. 4.**

Reducing the dynamic range of the resulting scaled and color-converted sample values allows a 16 (or 32) bit integer implementation of the complete decoding method taking into account the constraints of the typical 16 (or 32) bits color converters.

**Fig. 4** shows an illustration of the volume of both YCbCr and RGB color spaces.

As can be seen, the color values are expressed in a wider volume when these color values are expressed in the YCbCr color space rather than in the RGB color space. However, theoretically, ¾ or more of the YCbCr code combinations do not represent colors. For example, when the 8-bit Rec. 601 standard YCbCr is used, only 17% of the codewords represent colors. Thus, the YCbCr color space represents fewer colors (or equivalently more quantization noise), than the RGB color space (*SIGGRAPH2004: Color science and color appearance models for CG, HDTV, D-Cinema, Charles Poynton).*

Consequently, because the YCbCr colors are localized in a relative small part of the whole volume of the YCbCr color space, the dynamic range of the sample values expressed as YCbCr colors is smaller than the dynamic range of these sample values when they are expressed as RGB colors.

On **Fig. 1-3,** the modules are functional units, which may or not be in relation with distinguishable physical units. For example, these modules or some of them may be brought together in a unique component or circuit, or contribute to functionalities of a *software. A contrario,* some modules may potentially be composed of separate physical entities. The apparatus which are compatible with the invention are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

**Fig. 5** represents an exemplary architecture of a device 50 which may be configured to implement a method described in relation with **Fig. 1-3.**

Device 50 comprises following elements that are linked together by a data and address bus 51:

- a microprocessor 52 (or CPU), which is, for example, a DSP (or Digital Signal Processor);
- a ROM (or Read Only Memory) 53;
- a RAM (or Random Access Memory) 54;
- an I/O interface 55 for reception of data to transmit, from an application; and
- a battery 56

According to a variant, the battery 56 is external to the device. Each of these elements of **Fig. 5** are well-known by those skilled in the art and won't be disclosed further. In each of mentioned memory, the word « register » used in the specification can correspond to area of small capacity (some bits) or to very large area (e.g. a whole program or large amount of received or decoded data). ROM 53 comprises at least a program and parameters. Algorithm of the methods according to the invention is stored in the ROM 53. When switched on, the CPU 52 uploads the program in the RAM and executes the corresponding instructions.

RAM 54 comprises, in a register, the program executed by the CPU 52 and uploaded after switch on of the device 50, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to different embodiments of the decoding or decoder, the decoded picture Î is sent to a destination; specifically, the destination belongs to a set comprising:

- a local memory (53 or 54), e.g. a video memory or a RAM, a flash memory, a hard disk ;
- a storage interface (55), e.g. an interface with a mass storage, a RAM, a flash memory, a ROM, an optical disc or a magnetic support;
- a communication interface (55), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface); and
- a display.

According to different embodiments of decoding or decoder, the bitstream F is obtained from a source. Exemplarily, the bitstream is read from a local memory, e.g. a video memory (54), a RAM (54), a ROM (53), a flash memory (53) or a hard disk (53). In a variant, the bitstream is received from a storage interface (55), e.g. an interface with a mass storage, a RAM, a ROM, a flash memory, an optical disc or a magnetic support and/or received from a communication interface (55), e.g. an interface to a point to point link, a bus, a point to multipoint link or a broadcast network.
According to different embodiments, device 50 being configured to implement a decoding method described in relation with **Fig. 1-3,** belongs to a set comprising:

- a mobile device ;
- a communication device ;
- a game device ;
- a set top box;
- a TV set;
- a tablet (or tablet computer) ;
- a laptop ;
- a display and
- a decoding chip.

Implementations of the various processes and features described herein may be embodied in a variety of different equipment or applications, particularly, for example, equipment or applications. Examples of such equipment include a decoder, a post-processor processing output from a decoder, a video decoder, a web server, a set-top box, a laptop, a personal computer, a cell phone, a PDA, and other communication devices. As should be clear, the equipment may be mobile and even installed in a mobile vehicle.
Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.
The instructions may form an application program tangibly embodied on a processor-readable medium.
Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.
As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.
A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for decoding an HDR picture from a bitstream representing a LDR picture and an illumination picture, the method comprising:

   - obtaining a decoded version of the HDR picture by multiplying the sample values of a decoded version of the LDR picture by the sample values of the decoded version of the illumination picture; and
   - obtaining a color value expressed in an output color space for each sample value of the decoded version of the HDR picture;
   **characterized in that** it further comprises:
   - obtaining a color value expressed in the output color space for each sample value of a decoded version of the LDR picture just before multiplying said color values by the sample values of the decoded version of the illumination picture.

2. The method according to the claim 1, wherein the method further comprising scaling and color-converting the sample values of a decoded version of the LDR picture, wherein the sample values of the decoded version of the LDR are color-converted before scaled.

3. The method according to the claim 1 or 2, wherein the output color space is a CIEXYZ or a RGB color space.

4. A device for decoding an HDR picture from a bitstream representing a LDR picture and an illumination picture, the device comprising a processor configured for:

   - obtaining a decoded version of the HDR picture by multiplying the sample values of a decoded version of the LDR picture by the sample values of the decoded version of the illumination picture; and
   - obtaining a color value expressed in an output color space for each sample value of the decoded version of the HDR picture;
   **characterized in that** the processor is further configured for:
   - obtaining a color value expressed in the output color space for each sample value of a decoded version of the LDR picture just before multiplying said color values by the sample values of the decoded version of the illumination picture.

5. A computer program product comprising program code instructions to execute the steps of the decoding method according to claim 1-3 when this program is executed on a computer.

6. A processor readable medium having stored therein instructions for causing a processor to perform at least the steps of the decoding method according to claim 1-3.

7. Non-transitory storage medium carrying instructions of program code for executing steps of the method according to one of claims 1 to 3, when said program is executed on a computing device.

Fig. 1

Fig. 2

Fig. 3

**Fig. 4**

**Fig. 5**

Europäisches
Patentamt

European
Patent Office

Office européen
des brevets

# EUROPEAN SEARCH REPORT

Application Number

EP 14 30 5949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LASSERRE S ET AL: "High Dynamic Range video coding", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0159, 5 January 2014 (2014-01-05), XP030115677, * figures 1, 2, 4, 5 * * abstract * * section 2 "Overview of the coding scheme" * * section 3 "Specific implementation based on LDR and backlighting" * * section 4.2 "PQ EOTF/Ydsdx chain implementation" * ----- | 1-7 | INV. H04N19/98 |
| X | David Touzé ET AL: "HDR Video Coding based on Local LDR Quantization", HDRi2014 -Second International Conference and SME Workshop on HDR imaging, 4 March 2014 (2014-03-04), XP055112158, Retrieved from the Internet: URL:http://people.irisa.fr/Ronan.Boitard/articles/2014/HDR Video Coding based on Local LDR Quantization.pdf [retrieved on 2014-04-04] * figures 1, 2, 5 * * section 3 "Overview of the coding scheme" * * section 4. "Implementation based on LDR and Illuminant Map" * ----- | 1-7 | TECHNICAL FIELDS SEARCHED (IPC) H04N |

-/--

The present search report has been drawn up for all claims

| Place of search | Date of completion of the search | Examiner |
|---|---|---|
| The Hague | 28 November 2014 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 14 30 5949 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Sewoong Oh: "High Dynamic Range Image Encoding for BrightSide Display", , 1 January 2006 (2006-01-01), XP055130767, Retrieved from the Internet: URL:http://scien.stanford.edu/pages/labsite/2007/psych221/projects/07/HDR_encoding/SewoongOh_report.pdf [retrieved on 2014-07-22] * the whole document * ----- | 1-7 | |

|  |  |
|---|---|
|  | TECHNICAL FIELDS SEARCHED (IPC) |

The present search report has been drawn up for all claims

| Place of search | Date of completion of the search | Examiner |
|---|---|---|
| The Hague | 28 November 2014 | Stoufs, Maryse |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LASSERRE et al.** High Dynamic Range Video Coding. *JCTVC-P0159/m32076,16th MPEG meeting,* 09 January 2014